# EUROPEAN PATENT SPECIFICATION

(11) **EP 2 009 058 B1**
(45) Date of publication and mention of the grant of the patent: **18.07.2012**
(21) Application number: 07741810.1
(22) Date of filing: 17.04.2007
(51) Int. Cl.: C08L 79/08, C08G 73/10, C08K 5/3415

(54) **THERMOSETTING POLYIMIDE RESIN COMPOSITION AND CURED PRODUCT THEREOF**
WÄRMEHÄRTENDE POLYMERHARZZUSAMMENSETZUNG UND HARTPRODUKT DARAUS
FORMULE DE RÉSINE POLYIMIDE THERMODURCISSABLE ET PRODUIT DURCI OBTENU À PARTIR DE LADITE FORMULE

(30) Priority: 18.04.2006 JP 2006114948; 13.09.2006 JP 2006248550
(43) Date of publication of application: 31.12.2008
(73) Proprietor: Mitsubishi Gas Chemical Company, Inc., Tokyo 100-8324 (JP)
(72) Inventor: OHKIDO, Masahito, Hiratsuka-shi Kanagawa 254-0016 (JP); UENO, Wataru, Hiratsuka-shi Kanagawa 254-0016 (JP); OISHI, Jitsuo, Hiratsuka-shi Kanagawa 254-0016 (JP); KIHARA, Shuta, Higashiyawata 5-chome Hiratsuka-shi, Kanagawa (JP)
(74) Representative: Gille Hrabal
(86) International application number: PCT/JP2007/058374
(87) International publication number: WO 2007/119854

(56) References cited:
- EP-A1- 2 070 987
- JP-A- 2 024 323
- JP-A- 5 032 950
- JP-A- 02 024 323
- JP-A- 05 032 950
- JP-A- 05 230 212
- JP-A- 11 217 435
- JP-A- 2005 146 170
- JP-A- 2005 226 059
- JP-A- 2007 112 891

## Description

### [Technical Field]

The present invention relates to a thermosetting polyimide resin composition and a cured product thereof. The thermosetting polyimide resin composition is a one-component curing type and has a long pot life, for example, not cured at room temperature, and the like, and the cured product thereof has excellent flexibility and heat resistance, for example, not decomposed upon heating to 250°C, and the like, and has adhesiveness at a high temperature, thereby being applicable to various industrial products.

### [Background Art]

A polyimide resin has been widely utilized as engineering plastics excellent in heat resistance. In particular, a polyimide resin obtained by reacting a bismaleimide compound and an aromatic diamine as raw materials is being widely applied as a thermosetting polyimide resin to an electric insulating material and the like.
Examples of the known production method of the thermosetting polyimide resin with a bismaleimide compound and an aromatic diamine as raw materials include (1) a method of reacting a bismaleimide compound and a diamine in an amide solvent, such as dimethylformamide (DMF), dimethylacetamide, N-methylpyrrolidone or the like, without the use of a catalyst (Patent Document 1), (2) a method of reacting a bismaleimide compound and an aromatic diamine with a carboxylic acid or a mineral acid as a catalyst (Patent Document 2), and the like.
However, a thermosetting polyimide resin obtained by the conventional production method using a bismaleimide compound and an aromatic diamine as raw materials is suitable for a purpose of a composite material, such as a structural material, a laminated material, a molded material and the like, but upon utilizing in the form of a film, a sheet or the like, it is difficult to mold a resulting polyimide resin into a film, a sheet or the like due to lack of flexibility.

For providing a polyimide resin rich in flexibility, such a method has been practiced that a bismaleimide compound and an aliphatic diamine as raw materials are reacted in an organic solvent to provide a thermosetting polyimide resin (Patent Document 3). However, an aliphatic diamine has high reactivity as compared to an aromatic diamine, and upon reacting in an organic solvent, it is polymerized at a low temperature within a short period of time, and a reaction liquid is cured from a liquid state to a solid state, whereby it is difficult to handle due to the short pot life.

[Patent Document 1] French Patent No. 1,555,564
[Patent Document 2] JP-A-46-3845
[Patent Document 3] JP-A-5-148360

### [Brief Description of the Drawings]

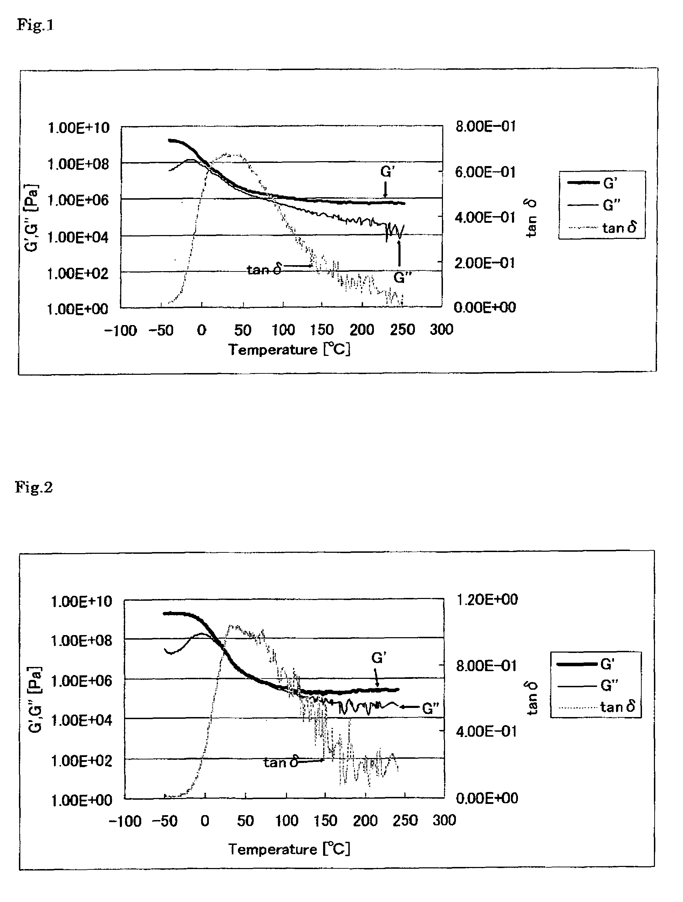

[Fig. 1] Fig. 1 is a chart showing measurement results of viscoelasticity of a cured product (film) of a thermosetting polyimide resin composition synthesized in Example 1.
[Fig. 2] Fig. 2 is a chart showing measurement results of viscoelasticity of a cured product (film) of a thermosetting polyimide resin composition synthesized in Example 2.

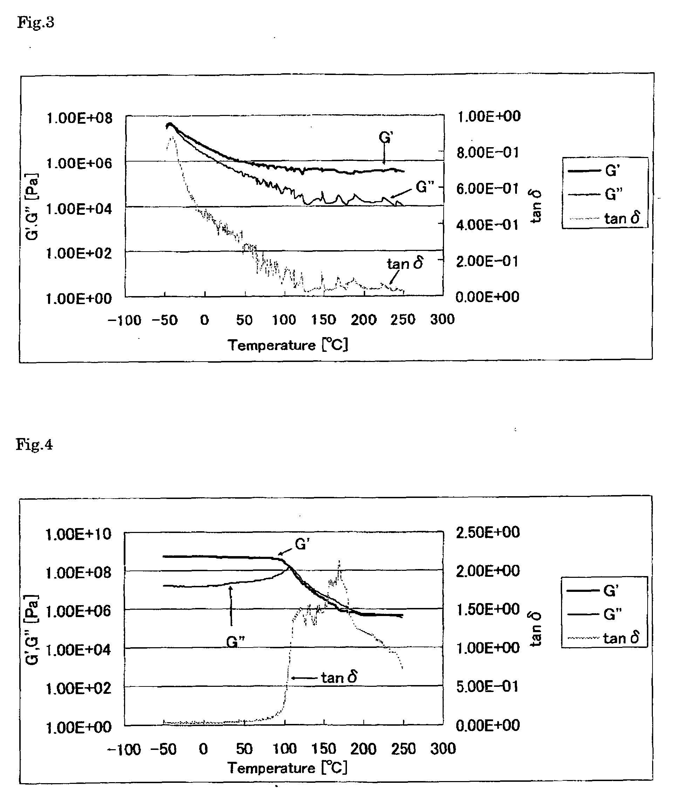

[Fig. 3] Fig. 3 is a chart showing measurement results of viscoelasticity of a cured product (film) of a thermosetting polyimide resin composition synthesized in Example 3.
[Fig. 4] Fig. 4 is a chart showing measurement results of viscoelasticity of a cured product (film) of a thermosetting polyimide resin composition synthesized in Example 4.

### [Disclosure of the Invention]

### [Problems that the Invention is to Solve]

Under the circumstances, an object of the present invention is to provide a thermosetting polyimide resin composition that is a one-component curing type and has a long pot life, and a cured product that has excellent flexibility and heat resistance, for example, not decomposed upon heating to 250°C, and the like, and has adhesiveness at a high temperature.

### [Means for Solving the Problems]

Accordingly, the present invention provides:
(1) A thermosetting polyimide resin composition obtained by the following steps (1) to (3):
   Step (1): mixing a tetracarboxylic acid component containing at least one compound selected from a tetracarboxylic dianhydride represented by formula (1), a tetracarboxylic acid represented by formula (2) and a derivative of the tetracarboxylic acid, with an aliphatic diamine represented by formula (3), to make a number of moles of the tetracarboxylic acid component excessive to a number of moles of the aliphatic diamine, and reacting them under heating to synthesize a polyimide (A);
   Step (2): mixing the polyimide (A) obtained in the step (1) with an aromatic diamine represented by formula (4), and reacting them under heating to synthesize a polyimide (B); and
   Step (3): mixing the polyimide (B) obtained in the step (2) with a bismaleimide compound represented by formula (5): 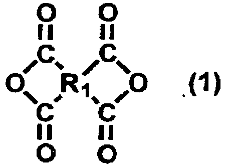 (wherein R₁ represents a tetravalent organic group) 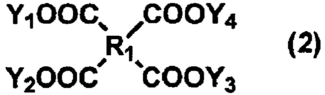 (wherein R₁ represents a tetravalent organic group, and Y₁ to Y₄ each independently represent a hydrocarbon group having from 1 to 8 carbon atoms)

      **H₂N-X₁-NH₂** **(3)**

      (wherein X₁ represents a divalent organic group having from 1 to 221 carbon atoms, and containing an aliphatic group or an alicyclic group bonded directly to an amino group, wherein the divalent organic group may contain a substituent, such as an aromatic group, an ether group and the like, as a part of the structure thereof)

      **H₂N-X₂-NH₂** **(4)**

      (wherein X₂ represents a divalent organic group having from 6 to 27 carbon atoms, and containing an aromatic ring bonded directly to an amino group, wherein the divalent organic group may contain a substituent, such as an aliphatic group, an alicyclic group and the like, as a part of the structure thereof) 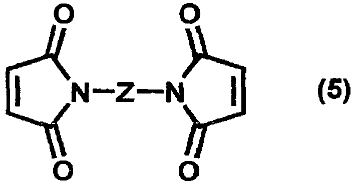 (wherein Z represents a divalent organic group);
(2) The thermosetting polyimide resin composition as described in the item (1), wherein the aliphatic diamine is a polyoxyalkylenediamine;
(3) A cured product obtained by curing the thermosetting polyimide resin composition as described in the item (1) under heating to from 150 to 250°C for from 0.5 to 10 hours; and
(4) A cured product having adhesiveness obtained by curing the thermosetting polyimide resin composition as described in the item (2) under heating to from 150 to 250°C for from 0.5 to 10 hours.

### [Advantages of the Invention]

The present invention provides a thermosetting polyimide resin composition that is a one-component curing type and has a long pot life, and a cured product that has excellent flexibility and heat resistance, for example, not decomposed upon heating to 250°C, and the like, and has adhesiveness at a high temperature. In the case where the aliphatic diamine used for producing the thermosetting polyimide resin composition is a polyoxyalkylenediamine, in particular, the resulting cured product of the thermosetting polyimide resin composition has such a characteristic feature of exhibiting adhesiveness.
Furthermore, the polyimide (B) as a component of the thermosetting polyimide resin composition and the polyimide (A) as a precursor thereof can be synthesized with no solvent, and can be diluted with a low boiling point solvent, such as tetrahydrofuran, acetone and the like. Accordingly, the thermosetting polyimide resin composition of the present invention can be obtained as a solution having a high solid concentration in the production process thereof, whereby the working process can be rationalized by shortening the drying time for obtaining a cured product of the polyimide resin composition, and safety and health conditions can be improved by reducing the amount of the solvent exhausted upon drying.

### [Best Mode for carrying out the Invention]

The invention will be described in detail below.
In ordinary production of polyimide, a tetracarboxylic dianhydride is generally used as a tetracarboxylic acid component as a raw material, but in the present invention, in addition to the tetracarboxylic dianhydride, a tetracarboxylic acid thereof and an ester compound of the tetracarboxylic acid and an alcohol may be used. Accordingly, a tetracarboxylic acid can be used as it is as a raw material in the present invention, and thus a practically useful polyimide resin composition can be produced with advantages in production equipment and cost.

The highly heat-resistant thermosetting polyimide resin composition and the cured product thereof of the present invention can be obtained by a method containing the following steps (1) to (4).
Step (1): A step of mixing a tetracarboxylic acid component with an aliphatic diamine to make a number of moles of the tetracarboxylic acid component excessive to a number of moles of the aliphatic diamine, and reacting them under heating to synthesize a polyimide (A)
Step (2): a step of mixing the polyimide (A) obtained in the step (1) with an aromatic diamine, and reacting them under heating to synthesize a polyimide (B)
Step (3): a step of mixing the polyimide (B) obtained in the step (2) with a bismaleimide compound at room temperature to provide a thermosetting polyimide resin composition
Step (4): a step of curing the thermosetting polyimide resin composition obtained in the step (3) under heating

### Step (1): Tetracarboxylic Acid Component (Tetracarboxylic Dianhydride)

The tetracarboxylic dianhydride used in the present invention is represented by formula (1), and examples thereof include an aliphatic tetracarboxylic dianhydride and an aromatic tetracarboxylic dianhydride. In formula (1), R₁ represents a tetravalent organic group.

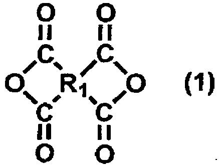

Examples of the aliphatic tetracarboxylic dianhydride include 1,2,4,5-cyclohexanetetracarboxylic dianhydride, 1,2,3,4-butanetetracarboxylic dianhydride, 1,2,3,4-cyclobutanetetracarboxylic dianhydride, 1,2,3,4-cyclopentanetetracarboxylic dianhydride, bicyclo[2.2.2]oct-7-ene-2,3,5,6-tetracarboxylic dianhydride, dicyclohexyltetracarboxylic dianhydride and the like.

Examples of the aromatic tetracarboxylic dianhydride include pyromellitic dianhydride, 3,3',4,4'-bipehnyltetracarblxylic dianhydride, 2,3,3',4'-biphenyltetracarboxylic dianhydride, 2,2-bis(3,4-dicarboxyphenyl)propane dianhydride, 2,2-bis(2,3-dicarboxyphenyl)propane dianhydride, 2,2-bis(3,4-dicarboxyphenyl)-1,1,1,3,3,3-hexafluoropropane dianhydride, 2,2-bis(2,3-dicarboxyphenyl)-1,1,1,3,3,3-hexafluoropropane dianhydride, bis(3,4-dicarboxyphenyl)sulfone dianhydride, bis(3,4-dicarboxyphenyl)ether dianhydride, bis(2,3-dicarboxyphenyl)ether dianhydride, 3,3',4,4'-benzophenonetetracarboxylic dianhydride, 2,2',3,3'-benzophenonetetracarboxylic dianhydride, 4,4'-(p-phenylenedioxy)diphthalic dianhydride, 4,4'-(m-phenylenedioxy)diphthalic dianhydride, ethylenetetracarboxylic dianhydride, 3-carboxymethyl-1,2,4-cyclopentanetricarboxylic dianhydride, 1,1-bis(2,3-dicarboxyphenyl)ethane dianhydride, bis(2,3-dicarboxyphenyl)methane dianhydride, bis(3,4-dicarboxyphenyl)methane dianhydride and the like.

### Step (1): Tetracarboxylic Acid Component (Tetracarboxylic Acid)

The tetracarboxylic acid used in the present invention is represented by formula (2), and examples thereof include an aliphatic tetracarboxylic acid and an aromatic tetracarboxylic acid. In formula (2), R₁ represents a tetravalent organic group as similar to R₁ in formula (1), and Y₁ to Y₄ each independently represent a hydrocarbon group having from 1 to 8 carbon atoms.

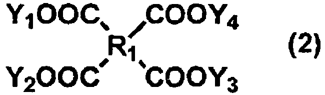

Examples of the aliphatic tetracarboxylic acid include 1,2,4,5-cyclohexanetetracarboxylic acid, 1,2,3,4-butanetetracarboxylic acid, 1,2,3,4-cyclobutanetetracarboxylic acid, 1,2,3,4-cyclopentanetetracarboxylic acid, bicyclo[2.2.2]oct-7-ene-2,3,5,6-tetracarboxylic acid, dicyclohexyltetracarboxylic acid and the like, and examples of the derivative thereof include an ester compound of the aliphatic tetracarboxylic acid and an alcohol having from 1 to 8 carbon atoms.

Examples of the aromatic tetracarboxylic acid include pyromellitic acid, 3,3',4,4'-bipehnyltetracarblxylic acid, 2,3,3',4'-biphenyltetracarboxylic acid, 2,2-bis(3,4-dicarboxyphenyl)propane, 2,2-bis(2,3-dicarboxyphenyl)propane, 2,2-bis(3,4-dicarboxyphenyl)-1,1,1,3,3,3-hexafluoropropane, 2,2-bis(2,3-dicarboxyphenyl)-1,1,1,3,3,3-hexafluoropropane, bis(3,4-dicarboxyphenyl)sulfone, bis(3,4-dicarboxyphenyl)ether, bis(2,3-dicarboxyphenyl)ether, 3,3',4,4'-benzophenonetetracarboxylic acid, 2,2',3,3'-benzophenonetetracarboxylic acid, 4,4'-(p-phenylenedioxy)diphthalic acid, 4,4'-(m-phenylenedioxy)diphthalic acid, ethylenetetracarboxylic acid, 3-carboxymethyl-1,2,4-cyclopentanetricarboxylic acid, 1,1-bis(2,3-dicarboxyphenyl)ethane, bis(2,3-dicarboxyphenyl)methane, bis(3,4-dicarboxyphenyl)methane and the like, and examples of the derivative thereof include an ester compound of the aromatic tetracarboxylic acid and an alcohol having from 1 to 8 carbon atoms.

### Step (1): Tetracarboxylic Acid Component (Derivative)

Among the tetracarboxylic dianhydride, the tetracarboxylic acid and the derivative of the tetracarboxylic acids, at least one selected from a compound having a structure derived from cyclohexane and a compound having a structure derived from benzene are preferred, and a compound having a structure derived from cyclohexane is more preferred. In other words, R₁ in formulae (1) and (2) is preferably at least one selected from a tetravalent group derived from cyclohexane and a tetravalent group derived from benzene, and more preferably a tetravalent group derived from cyclohexane. In particular, preferred examples thereof include 1,2,4,5-cyclohexanetetracarboxylic dianhydride and 1,2,4,5-cyclohexanetetracarboxylic acid. These may be used solely or as a mixture of two or more of them.

### Step (1): Aliphatic Diamine

The aliphatic diamine used in the present invention is a diamine represented by formula (3) containing an aliphatic group or an alicyclic group bonded directly to an amino group.

**H₂N-X₁-NH₂** **(3)**

In the aliphatic diamine represented by formula (3), X₁ represents a divalent organic group having from 1 to 221 carbon atoms, and containing a substituent, such as an aromatic group, an ether group and the like, as a part of the structure thereof. The aliphatic diamine is preferably a polyoxyalkylenediamine since a thermosetting polyimide resin composition that has adhesiveness in addition to flexibility can be obtained.
The adhesiveness referred herein means a property of a material that is adhered by applying a slight pressure at ordinary temperature for a short period of time without the use of water, solvent, heat or the like, and the adhesion force referred herein means a force that is necessary for peeling of a test piece from an adherent after making the test piece in contact therewith under a slight pressure at ordinary temperature for a short period of time.

Examples of the polyoxyalkylenediamine include a polyoxypropylenediamine represented by formula (7), a polyoxyethylenediamine represented by formula (8), a polyoxybutylenediamine represented by formula (9) and a copolymer thereof. Preferred examples thereof include a polyoxyalkylenediamine having a skeleton derived from a propylene oxide and an ethylene oxide represented by formula (6) from the standpoint of providing a cured product having favorable adhesiveness.

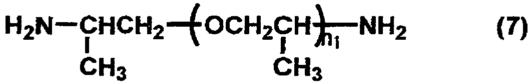

(wherein n₁ represents a polymerization degree of a propylene oxide unit)

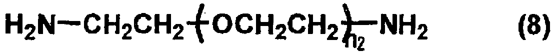

(wherein n₂ represents a polymerization degree of an ethylene oxide unit)

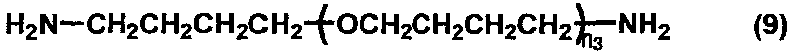

(wherein n₃ represents a polymerization degree of a butylene oxide unit)

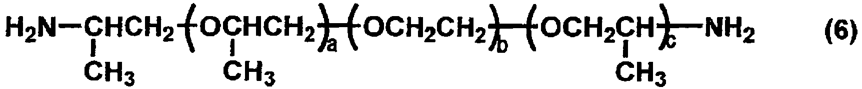

(wherein a and c each represent a polymerization degree of a propylene oxide unit, and b represents a polymerization degree of an ethylene oxide unit).

The polyoxyalkylenediamine preferably has a molecular weight shown below from the standpoint of providing a cured product having favorable adhesiveness.
The molecular weight of the polyoxyalkylenediamine represented by formula (6) is preferably from 300 to 4,000 (where the polymerization degree (a + c) of propylene oxide is from 1.0 to 9.4 (provided that c is not 0), and the polymerization degree b of ethylene oxide is from 3.7 to 79.8), and more preferably from 600 to 2,000 (where the polymerization degree (a + c) of propylene oxide is from 3.6 to 6.0 (provided that c is not 0), and the polymerization degree b of ethylene oxide is from 9.0 to 38.7).
The molecular weight of the polyoxypropylenediamine represented by formula (7) is preferably from 230 to 4,000 (where the polymerization degree n₁ of propylene oxide is from 2.6 to 68.0), and more preferably from 600 to 2,000 (where the polymerization degree n₁ of propylene oxide is from 8.7 to 33.0).
The molecular weight of the polyoxyethylenediamine represented by formula (8) is preferably from 300 to 4,000 (where the polymerization degree n₂ of ethylene oxide is from 5.5 to 89.5), and more preferably from 600 to 2,000 (where the polymerization degree n₂ of ethylene oxide is from 12.3 to 44.1).
The molecular weight of the polyoxybutylenediamine represented by formula (9) is preferably from 200 to 4,000 (where the polymerization degree n₃ of butylene oxide is from 1.6 to 54.3), and more preferably from 600 to 2,000 (where the polymerization degree n₃ of butylene oxide is from 7.1 to 26.6).

In the aliphatic diamine represented by formula (3) used in the present invention, examples of a diamine other than the polyoxyalkylenediamine include 4,4'-diaminodicyclohexylmethane, isophoronediamine, ethylenediamine, tetramethylenediamine, norbornenediamine, p-xylylenediamine, 1,3-bis(aminomethyl)cyclohexane, 1,3-diaminocyclohexane, hexamethylenediamine, m-xylylenediamine, 4,4'-methylenebis(cyclohexylamine), bicyclohexyldiamine, a siloxanediamine compound and the like. Among these, a diamine having an alicyclic structure, such as 4,4'-diaminodicyclohexylmethane, isophoronediamine, 1,3-diaminocyclohexane and the like, is preferably used since a high molecular weight can be easily obtained, and excellent heat resistance can be obtained. The diamine may be used solely or as a mixture of two or more of them.

### Step (1): Synthesis of Polyimide (A)

The polyimide (A) is synthesized through thermal imidization reaction of the step (1), in which the aliphatic diamine and the tetracarboxylic acid component containing at least one compound selected from a tetracarboxylic dianhydride, a tetracarboxylic acid and a derivative of the tetracarboxylic acid are mixed to make a number of moles of the tetracarboxylic acid component excessive to a number of moles of the aliphatic diamine, and are reacted under heating.

In the synthesis reaction of the polyimide (A), the mixing amount of the tetracarboxylic acid component containing at least one compound selected from the tetracarboxylic dianhydride represented by formula (1), the tetracarboxylic acid represented by formula (2) and the derivative of the tetracarboxylic acid is necessarily 1 mol or more, preferably from 1.01 to 2 mol, and more preferably from 1.5 to 2 mol, per 1 mol of the aliphatic diamine represented by formula (3). It is preferred that an acid anhydride group or a group derived from a dicarboxylic acid derivative capable of forming imide is disposed at both ends of the polyimide (A). In the case where the mixing amount of the tetracarboxylic acid component per 1 mol of the aliphatic diamine is in the aforementioned range, it is preferred from the standpoint of reaction with the aromatic amine described later since the amount of the both ends of the polyimide (A) that do not have a group derived from the tetracarboxylic acid component is not large, and it is also preferred from the standpoint of prevention of heat resistance from being lowered since the tetracarboxylic acid component does not remain unreacted in a large amount to prevent the monomer component from remaining.

The polyimide (A) can be obtained by performing the thermal imidization reaction under no solvent used, but various kinds of organic solvents may be used. Examples of the solvent include N,N-dimethylacetamide, N-methyl-2-pyrrolidone, N,N-dimethylformamide, dimethysulfoxide, hexamethylphosphoramide, tetramethylenesulfone and the like, which may be used solely or in combination of two or more of them. Among these, N-methyl-2-pyrrolidone and N,N-dimethylacetamide are preferred. Xylene or toluene may be added for performing azeotropic dehydration. After synthesizing the polyimide (A), it may be diluted with a low boiling point solvent, such as tetrahydrofuran, acetone, methanol and the like.

In the synthesis reaction of the polyimide (A), the aliphatic diamine may be used after dissolving in the organic solvent described above depending on necessity. The reaction temperature of the thermal imidization reaction is preferably from 150 to 200°C, and particularly preferably from 180 to 200°C. In the case where the reaction temperature is in the range, a practically useful polyimide can be synthesized by providing a sufficiently high molecular weight, and thus it is economically preferred from the standpoint of cost. The reaction time is preferably from 1 to 12 hours, and particularly preferably from 3 to 6 hours. In the case where the reaction time is in the range, a practically useful polyimide can be synthesized by providing a sufficiently high molecular weight, and thus it is economically preferred from the standpoint of cost. The thermal imidization reaction may be performed with toluene or xylene as an azeotropic solvent. The formation of the polyimide can be confirmed with characteristic absorption of an imide ring in an IR spectrum around 1,770 and 1,700 cm⁻¹.

### Step (2): Aromatic Diamine

The step (2) is a step of synthesizing a polyimide (B) through thermal imidization reaction, in which the polyimide (A) obtained in the step (1) and an aromatic diamine are mixed and reacted under heating.
The aromatic diamine represented by formula (4) used in the step contains an aromatic ring bonded directly to an amino group and provides the polyimide (B) through reaction under heating with the polyimide (A) obtained in the step (1).

**H₂N-X₂-NH₂** **(4)**

In formula (4), X₂ represents a divalent organic group having from 6 to 27 carbon atoms, and containing a substituent, such as an aliphatic group, an alicyclic group and the like, as a part of the structure thereof.

Examples of the aromatic diamine include 3,4'-diaminodipehnyl ether, 4,4'-diaminodiphenyl ether, 4,4'-diaminodiphenylmethane, 4,4'-diaminodiphenylsulfone, m-phenylenediamine, p-phenylenediamine, 2,4-toluenediamine, diaminobenzophenone, 2,6-diaminonaphthalene, 1,5-diaminonaphthalene, 1,4-bis(4-aminophenoxy)benzene, 1,3-bis(4-aminophenoxy)benzene, 1,3-bis(3-aminophenoxy)benzene, 4,4'-bis(4-aminophenoxy)biphenyl, α,α'-bis(3-aminophenyl)-1,4-diisopropylbenzene, bis[4-(4-aminophenoxy)phenyl]sulfone, bis[4-(3-aminophenoxy)phenyl]sulfone, α,α'-bis(4-aminophenyl)-1,4-diisopropylbenzene, 2,2-bis(4-aminophenoxyphenyl)propane and the like. Among these, 4,4'-diaminodiphenyl ether is preferred, and they may be used solely or as a mixture of two or more of them.

### Step (2): Synthesis of Polyimide (B)

The polyimide (B) is synthesized through thermal imidization reaction of the step (2), in which the polyimide (A) obtained in the step (1) and an aromatic diamine are reacted under heating.
In the synthesis reaction of the polyimide (B), the mixing amount of the aromatic diamine represented by formula (4) is preferably from 0.02 to 2 mol, and more preferably from 1 to 2 mol, per 1 mol of the aliphatic diamine used upon producing the polyimide (A). It is preferred that an aromatic amino group is disposed at both ends of the polyimide (B). In the case where the mixing amount of the aromatic diamine per 1 mol of the aliphatic diamine is in the aforementioned range, it is preferred since the proportion of the unreacted aromatic diamine is not increased, whereby a cured product obtained by curing under heating the thermosetting resin composition obtained in the subsequent steps is not lowered in flexibility.

The polyimide (B) can be synthesized by performing the thermal imidization reaction under no solvent used, but various kinds of organic solvents may be used. Examples of the solvent include a high boiling point solvent, such as N,N-dimethylacetamide, N-methyl-2-pyrrolidone, N,N-dimethylformamide, dimethysulfoxide, hexamethylphosphoramide, tetramethylenesulfone and the like, and a low boiling point solvent, such as tetrahydrofuran, acetone and the like, which may be used solely or in combination of two or more of them. Among these, N-methyl-2-pyrrolidone and N,N-dimethylacetamide are preferably used as the solvent. Xylene or toluene may be added for performing azeotropic dehydration. After synthesizing the polyimide (B), it may be diluted with a low boiling point solvent, such as tetrahydrofuran, acetone, methanol and the like.

In the synthesis reaction of the polyimide (B), the aromatic diamine may be used after dissolving in the organic solvent described above depending on necessity. The reaction temperature of the thermal imidization reaction is preferably from 150 to 200°C, and particularly preferably from 180 to 200°C. In the case where the reaction temperature is in the range, a practically useful polyimide can be synthesized by providing a sufficiently high molecular weight, and thus it is economically preferred from the standpoint of cost. The reaction time is preferably from 1 to 12 hours, and particularly preferably from 3 to 6 hours. In the case where the reaction time is in the range, a practically useful polyimide can be synthesized by providing a sufficiently high molecular weight, and thus it is economically preferred from the standpoint of cost. The thermal imidization reaction may be performed with toluene or xylene as an azeotropic solvent.

### Step (3): Bismaleimide Compound

The step (3) is a step of mixing the polyimide (B) obtained in the step (2) with a bismaleimide compound at room temperature to provide the thermosetting polyimide resin composition.
The bismaleimide compound is represented by formula (5), and examples thereof include N,N'-(4,4'-diphenylmethane)bismaleimide, N,N'-(4,4'-diphenyloxy)bismaleimide, N,N'-(4,4'-diphenylsulfone)bismaleimide, N,N'-p-phenylenebismaleimide, N,N'-m-phenylenebismaleimide, N,N'-2,4-tolylenebismaleimide, N,N'-2,6-tolylenebzsmaleimide, N,N'-ethylenebismaleimide, N,N'-hexamethylenebismaleimide, N,N'-{4,4'-[2,2'-bis(4'',4'''-phenoxyphenyl)-isopropylidene]}bismaleimide, N,N'-{4,4'[2,2'-bis(4'',4'''-phenoxyphenyl)-hexafluoroisopropylidene]}bismaleimide, N,N'-[4,4'-bis(3,5-dimethylphenyl)methane]bismaleimide, N,N'-[4,4'-bis(3,5-diethylphenyl)methane]bismaleimide, N,N'-[4,4'-(3-methyl-5-ethylphenyl)methane]bismaleimide, N,N'-[4,4'-bis(3,5-diisopropylphenyl)methane]bismaleimide, N,N'-(4,4'-dicyclohexylmethane)bismaleimide, N,N'-p-xylylenebismaleimide, N,N'-m-xylylenebismalemide, N,N'-(1,3-dimethylenecyclohexane)bismaleimide, N,N'-(1,4-dimethylenecyclohexane)bismaleimide and the like. A bismaleimide compound formed by blocking both ends of a polyoxyalkylenediamine with maleic anhydride may be used. Examples thereof include a bismaleimide compound formed by blocking both ends of a polyoxyethylenediamine with maleic anhydride, a bismaleimide compound formed by blocking both ends of a polyoxypropylenediamine with maleic anhydride, and a compound formed by blocking both ends of a polyoxybutylenediamine with maleic anhydride. Among these, N,N'-(4,4'-diphenylmethane)bismaleimide represented by formula (10) and N,N'-[4,4'-bis(3-methyl-5-ethylphenyl)methane]bismaleimide represented by formula (11) are preferred.

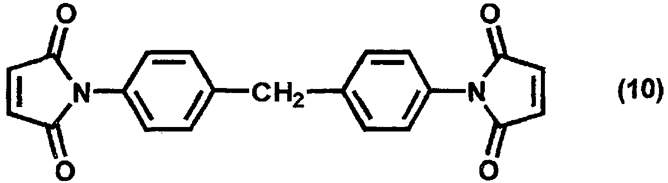

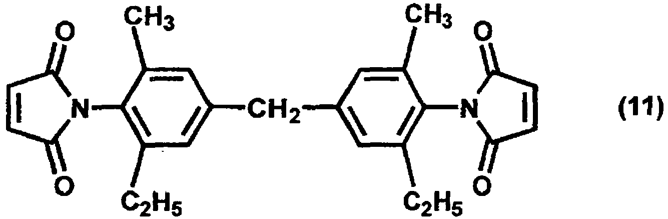

In the production of the thermosetting polyimide resin composition of the step (3), the mixing amount of the bismaleimide compound represented by formula (5) is preferably from 0.25 to 4 mol, and more preferably from 0.75 to 2 mol, per 1 mol of the aliphatic diamine used upon producing the polyimide (A). In the case where the mixing amount of the bismaleimide compound per 1 mol of the aliphatic diamine is in the range, a cured product obtained by curing under heating the thermosetting polyimide resin composition does not suffer shortage in strength due to a low crosslinking density thereof, and the thermosetting polyimide resin composition that provides a flexible cured product can be obtained.

The thermosetting polyimide resin composition of the present invention is obtained in the step (3) under no solvent used, but various kinds of organic solvents may be used. Examples of the solvent include an amide solvent, such as N,N-dimethylacetamide, N-methyl-2-pyrrolidone, N,N-dimethylformamide, hexamethylphosphoramide and the like, a ketone solvent, such as methyl ethyl ketone, acetone and the like, a cyclic ether solvent, such as 1,4-dioxane, tetrahydrofluran and the like, acetonitrile and the like, which may be used solely or in combination of two or more of them. Among these, an amide solvent, such as N,N-dimethylacetamide, N-methyl-2-pyrrolidone, N,N-dimethylformamide, hexamethylphosphoramide and the like, is preferably used.

### Production of Thermosetting Polyimide Resin Composition and Cured Product thereof

In the step (3), the thermosetting polyimide resin composition of the present invention can be obtained in the following manner. The polyimide (B) obtained in the step (2) and the bismaleimide compound are dissolved in a solvent and mixed to form a uniform solution. The amount of the solvent in the thermosetting polyimide resin composition is preferably such an amount that provides a viscosity capable of forming a film by casting. The mixing temperature is preferably from 0 to 80°C, and more preferably from 20 to 60°C. In the case where the mixing temperature is in the range, such phenomena may not occur that the bismaleimide compound is hard to be dissolved to fail to form a uniform liquid, and the liquid is cured into a solid state upon mixing.

The cured product of the thermosetting polyimide resin composition of the present invention can be obtained by curing under heating the thermosetting polyimide resin composition thus obtained in the aforementioned manner, and for example, by casting the thermosetting polyimide resin composition into a film on a substrate, such as glass, a metal, e.g., stainless steel, aluminum and the like, and the like, and cured under heating. The curing temperature is preferably from 150 to 250°C. In the case where the curing temperature is in the range, it is economically preferred from the standpoint of cost since no uncured part remains. The curing time is preferably from 0.5 to 10 hours. In the case where the curing time is in the range, it is economically preferred from the standpoint of cost since no uncured part remains. In the case where the cured product of the present invention has adhesiveness, the aforementioned curing temperature and curing time are preferred since upon peeling an adherent off from the adhesive layer after adhering, the adhesive layer may not suffer deposition thereof onto the adherent through cohesion failure due to too large an adhesion force with an uncured part. The cured product having been cured under heating on the substrate may be used as it is on the substrate, or may be used in the form of a film after peeling off from the substrate.

The cured product of the thermosetting polyimide resin composition of the present invention has excellent flexibility and heat resistance. In particular, the cured product of the thermosetting polyimide resin composition, in which the aliphatic diamine used as a raw material is a polyoxyalkylenediamine, has adhesiveness, and thus can be favorably applied to a wide range of industrial products, such as an adhesive tape and the like, as a purpose of a heat resistant adhesive material that is required to have flexibility and adhesiveness at a high temperature.

### [Example]

The present invention will be described in more detail below with reference to examples and comparative examples, but the invention is not limited to the examples.

The properties were measured in the following manners.

### Infrared Absorption Spectrum

An IR spectrum was obtained by using JIR-WINSPEC50 (infrared absorption spectrum), produced by JEOL Ltd.

### Solution Viscosity

A solution viscosity of a thermosetting polyimide resin composition having a solid concentration of 50% by weight (with N-methyl-2-pyrrolidone as solvent) was obtained at 25°C by using a cone-plate viscometer, Model TV-20, produced by Tokimec Inc.

### Thermogravimetric Analysis

By using a thermogravimetric analyzer (DTG-50), produced by Shimadzu Corporation, a sample was increased in temperature under nitrogen stream from room temperature under conditions of a temperature increasing rate of 10°C per minute, maintained at 200°C for 30 minutes to remove water content, and then increased from 200°C to 250°C at 5°C per minute. Thereafter, the sample was maintained at 250°C for 1 hour, and a reduction in weight (%) upon maintaining at 250°C was obtained.

### Dynamic Viscoelasticity

By using Lheolographsolid, produced by Toyo Seiki Seisaku-sho Ltd., a sample was measured under conditions of a test temperature of from -50 to 250°C, a distortion rate of 0.5%, a frequency of 10 Hz and a temperature increasing rate of 2°C per minute, to obtain a storage elastic modulus (G'), a loss elastic modulus (G") and a loss coefficient (tanδ), and a glass transition temperature was obtained from the peak top of the loss tangent (tanδ).

### Adhesion Force on 90° Peeling

Measurement was performed according to JIS Z0237. A polyimide resin film, Kapton 200H, having a width of 25 mm, a length of 150 mm and a thickness of 50 µm (Model Number: 22M11P0860, produced by Toray-Du Pont Co., Ltd.) was adhered to a polyimide cured product (film) formed on an aluminum plate, and pressed with a 2 kg rubber roller reciprocated once. After allowing to stand for 30 minutes, the polyimide resin film was peeled off at an angle of 90° under conditions of a peeling speed of 300 mm/min at 23°C and 50%RH to measure the 90° peeling adhesion force (N per 25 mm) between the polyimide cured product (film) and the polyimide resin film. As the measuring apparatus, Digital Force Gauge, ZP-5N, produced by Imada Co., Ltd., Sliding Motorized Stand, MX-500N, produced by Imada Co., Ltd., and 90° Peeling Table, P90-200N were used.

### Deposition of Adhesive

Upon measuring the adhesion force on 90° peeling, it was visually inspected as to whether or not so-called deposition of adhesive, in which an adhesive substance remains on the surface of the polyimide resin film, Kapton 200H, occurred.

### Synthesis Example 1

### Synthesis of Polyimides (A1 and B1)

33.91 g (0.15 mol) of 1,2,4,5-cyclohexanetetracarboxylic dianhydride, 96.67 g (0.10 mol) of ethylene oxide-propylene oxide copolymer bis(2-aminopropyl)ether (produced by Mitsui Fine Chemical Inc., product name: Jeffamine ED900) and 85.15 g of N-methyl-2-pyrrolidone were placed under a nitrogen stream in a 500-mL four-neck flask equipped with a thermometer, a stirrer, a nitrogen introducing tube, a dropping funnel with a bypass tube, a Dean-Stark trap and a condenser tube, and subjected to imidization reaction by heating to 200°C for 3 hours while separating generated water with the Dean-Stark trap. After lapsing 3 hours, it was confirmed that distillation of water was stopped, and 3.60 g of water was recovered to provide a polyimide (A1). As a result of confirmation of an IR spectrum of the polyimide (A1), characteristic absorption of an imide ring of ν (C=O) at 1,766 and 1,700 cm⁻¹ was found to confirm formation of polyimide.
20.13 g (0.10 mol) of 4,4'-diaminodiphenyl ether and 12.24 g of N-methyl-2-pyrrolidone were added to the polyimide (A1), and subjected to imidization reaction by heating to 200°C for 3 hours while separating generated water with the Dean-Stark trap. After lapsing 3 hours, it was confirmed that distillation of water was stopped, and 1.80 g of water was recovered, followed by cooling to room temperature, to provide a polyimide (B1). As a result of confirmation of an IR spectrum of the polyimide (B1), it was confirmed that there was no characteristic absorption of amide acid.

### Synthesis Example 2

### Synthesis of Polyimides (A2 and B2)

20.35 g (0.090 mol) of 1,2,4,5-cyclohexanetetracarboxylic dianhydride, 118.81 g (0.060 mol) of polyoxypropylenediamine (Jeffamine D2000, produced by Mitsui Fine Chemical Inc.) and 91.50 g of N-methyl-2-pyrrolidone were placed under a nitrogen stream in a 500-mL four-neck flask equipped with a thermometer, a stirrer, a nitrogen introducing tube, a dropping funnel with a bypass tube, a Dean-Stark trap and a condenser tube, and subjected to imidization reaction by heating to 200°C for 3 hours while separating generated water with the Dean-Stark trap. After lapsing 3 hours, it was confirmed that distillation of water was stopped, and 2.16 g of water was recovered to provide a polyimide (A2). As a result of confirmation of an IR spectrum of the polyimide (A2), characteristic absorption of an imide ring of ν (C=O) at 1,770 and 1,706 cm⁻¹ was found to confirm formation of polyimide.
12.08 g (0.060 mol) of 4,4'-diaminodiphenyl ether and 9.74 g of N-methyl-2-pyrrolidone were added to the polyimide (A2), and subjected to imidization reaction by heating to 200°C for 3 hours while separating generated water with the Dean-Stark trap. After lapsing 3 hours, it was confirmed that distillation of water was stopped, and 1.08 g of water was recovered, followed by cooling to room temperature, to provide a polyimide (B2). As a result of confirmation of an IR spectrum of the polyimide (B2), it was confirmed that there was no characteristic absorption of amide acid.

### Synthesis Example 3

### Synthesis of Polyimides (A3 and B3)

67.82 g (0.30 mol) of 1,2,4,5-cyclohexanetetracarboxylic dianhydride, 42.25 g (0.20 mol) of 4,4'-diaminodicyclohexylmethane and 72.82 g of N-methyl-2-pyrrolidone were placed under a nitrogen stream in a 500-mL four-neck flask equipped with a thermometer, a stirrer, a nitrogen introducing tube, a dropping funnel with a bypass tube, a Dean-Stark trap and a condenser tube, and subjected to imidization reaction by heating to 200°C for 3 hours while separating generated water with the Dean-Stark trap. After lapsing 3 hours, it was confirmed that distillation of water was stopped, and 7.20 g of water was recovered, followed by cooling to room temperature to provide a polyimide (A3). As a result of confirmation of an IR spectrum of the polyimide (A3), characteristic absorption of an imide ring of ν (C=O) at 1,764 and 1,689 cm⁻¹ was found to confirm formation of polyimide.
40.25 g (0.20 mol) of 4,4'-diaminodiphenyl ether and 20.37 g of N-methyl-2-pyrrolidone were added to the polyimide (A3), and subjected to imidization reaction by heating to 200°C for 3 hours while separating generated water with the Dean-Stark trap. After lapsing 3 hours, it was confirmed that distillation of water was stopped, and 3.60 g of water was recovered, followed by cooling to room temperature, to provide a polyimide (B3). As a result of confirmation of an IR spectrum of the polyimide (B3), it was confirmed that there was no characteristic absorption of amide acid.

### Synthesis Example 4

### Synthesis of Polyimide (A4)

33.91 g (0.15 mol) of 1,2,4,5-cyclohexanetetracarboxylic dianhydride and 289.98 g (0.30 mol) of ethylene oxide-propylene oxide copolymer bis(2-aminopropyl)ether (produced by Mitsui Fine Chemical Inc., product name: Jeffamine ED900) were placed under a nitrogen stream in a 1,000-mL four-neck flask equipped with a thermometer, a stirrer, a nitrogen introducing tube, a dropping funnel with a bypass tube, a Dean-Stark trap and a condenser tube, and subjected to imidization reaction by heating to 200°C for 3 hours while separating generated water with the Dean-Stark trap. After lapsing 3 hours, it was confirmed that distillation of water was stopped, and 5.28 g of water was recovered, followed by cooling to room temperature, to provide a polyimide (A4) solution. As a result of confirmation of an IR spectrum of the polyimide (A4), characteristic absorption of an imide ring of ν (C=O) at 1,766 and 1,697 cm⁻¹ was found to confirm formation of polyimide.

### Example 1

### Production of Thermosetting Polyimide Resin Composition

The entire amount of the reaction product solution containing the polyimide (B1) obtained in Synthesis Example 1, 19.22 g (0.050 mol) of N,N'-(4,4'-diphenylmethane)bismaleimide and 67.58 g of N-methyl-2-pyrrolidone were placed under a nitrogen stream in a 500-mL four-neck flask equipped with a thermometer, a stirrer, a nitrogen introducing tube, a dropping funnel with a bypass tube and a condenser tube, and completely dissolved by stirring at room temperature for 1 hour to provide a thermosetting polyimide resin composition. The solution viscosity of the thermosetting polyimide resin composition measured was 0.46 Pa·s. After allowing to stand still the solution for one month at 23°C, 50%RH, the solution viscosity measured was 0.59 Pa·s, and it was thus found that the thermosetting polyimide resin composition was not cured at room temperature since there was substantially no change in solution viscosity.
The polyimide resin composition was then coated to a coating thickness of 2.00 mm on an aluminum plate having a dimension of 150 mm × 150 mm and a thickness of 1 mm, and cured by placing in a dryer at 240°C for 1 hour, whereby a polyimide cured product (film) having a thickness of 0.76 mm with rubber-like elasticity was obtained, and it was confirmed that the polyimide cured product (film) was a flexible film after peeling off from the aluminum plate. Furthermore, the reduction in weight (%) of the polyimide cured product (film) measured after maintaining at 250°C for 1 hour was 0.08%, and it was found that the cured product was not decomposed and had heat resistance upon heating to 250°C since there was substantially no reduction in weight at 250°C. The measurement of the dynamic viscoelasticity of the polyimide cured product (film) revealed that the storage elastic modulus (G') was 1.56 × 10⁷ Pa, and the loss elastic modulus (G") was 1.05 × 10⁷ Pa, at 25°C.
The storage elastic modulus (G') was substantially constant without change around 250°C, and it was thus found that the cured product was in a rubber-like state around 250°C and has rubber elasticity even under heating to 250°C. The glass transition temperature obtained from the peak top of the loss tangent (tanδ) was 28.0°C.

### Example 2

### Production of Thermosetting Polyimide Resin Composition

The entire amount of the reaction product solution containing the polyimide (B1) obtained in the same manner as in Synthesis Example 1, 22.27 g (0.050 mol) of N,N'-[4,4'-bis(3-methyl-5-ethylphenyl)methane]bismaleimide and 70.63 g of N-methyl-2-pyrrolidone were placed under a nitrogen stream in a 500-mL four-neck flask equipped with a thermometer, a stirrer, a nitrogen introducing tube, a dropping funnel with a bypass tube and a condenser tube, and completely dissolved by stirring at room temperature for 1 hour to provide a thermosetting polyimide resin composition. The solution viscosity of the thermosetting polyimide resin composition measured was 0.43 Pa·s. After allowing to stand still the solution for one month at 23°C, 50%RH, the solution viscosity measured was 0.44 Pa·s, and it was thus found that the thermosetting polyimide resin composition was not cured at room temperature since there was substantially no change in solution viscosity.
The polyimide resin composition was then coated to a coating thickness of 2.00 mm on an aluminum plate having a dimension of 150 mm × 150 mm and a thickness of 1 mm, and cured by placing in a dryer at 240°C for 1 hour, whereby a polyimide cured product (film) having a thickness of 0.74 mm with rubber-like elasticity was obtained, and it was confirmed that the polyimide cured product (film) was a flexible film after peeling off from the aluminum plate. Furthermore, the reduction in weight (%) of the polyimide cured product (film) measured after maintaining at 250°C for 1 hour was 0.12%, and it was found that the cured product was not decomposed and had heat resistance upon heating to 250°C since there was substantially no reduction in weight at 250°C. The measurement of the dynamic viscoelasticity of the polyimide cured product (film) revealed that the storage elastic modulus (G') was 2.03 × 10⁷ Pa, and the loss elastic modulus (G") was 1.99 × 10⁷ Pa, at 25°C.
The storage elastic modulus (G') was substantially constant without change around 250°C, and it was thus found that the cured product was in a rubber-like state around 250°C and has rubber elasticity even under heating to 250°C. The glass transition temperature obtained from the peak top of the loss tangent (tanδ) was 32.0°C.

### Example 3

### Production of Thermosetting Polyimide Resin Composition

The entire amount of the reaction product solution containing the polyimide (B2) obtained in Synthesis Example 2, 11.51 g (0.030 mol) of N,N'-(4,4'-diphenylmethane)bismaleimide and 60.98 g of N-methyl-2-pyrrolidone were placed under a nitrogen stream in a 500-mL four-neck flask equipped with a thermometer, a stirrer, a nitrogen introducing tube, a dropping funnel with a bypass tube and a condenser tube, and completely dissolved by stirring at room temperature for 1 hour to provide a thermosetting polyimide resin composition. The solution viscosity of the thermosetting polyimide resin composition measured was 0.40 Pa·s. After allowing to stand still the solution for one month at 23°C, 50%RH, the solution viscosity measured was 0.51 Pa·s, and it was thus found that the thermosetting polyimide resin composition was not cured at room temperature since there was substantially no change in solution viscosity.
The polyimide resin composition was then coated to a coating thickness of 3.00 mm on an aluminum plate having a dimension of 150 mm × 150 mm and a thickness of 1 mm, and cured by placing in a dryer at 240°C for 1 hour, whereby a polyimide cured product (film) having a thickness of 1.26 mm with rubber-like elasticity was obtained, and it was confirmed that the polyimide cured product (film) was a flexible film after peeling off from the aluminum plate. Furthermore, the reduction in weight (%) of the polyimide cured product (film) measured after maintaining at 250°C for 1 hour was 0.13%, and it was found that the cured product was not decomposed and had heat resistance upon heating to 250°C since there was substantially no reduction in weight at 250°C. The measurement of the dynamic viscoelasticity of the rubber-like elastic body (film) revealed that the storage elastic modulus (G') was 1.59 × 10⁶ Pa, and the loss elastic modulus (G") was 5.63 × 10⁶ Pa, at 25°C.
The storage elastic modulus (G') was substantially constant without change around 250°C, and it was thus found that the cured product was in a rubber-like state around 250°C and has rubber elasticity even under heating to 250°C. The glass transition temperature obtained from the peak top of the loss tangent (tanδ) was -43.0°C.

### Example 4

### Production of Thermosetting Polyimide Resin Composition

The entire amount of the reaction product solution containing the polyimide (B3) obtained in Synthesis Example 3, 38.43 g (0.10 mol) of N,N'-(4,4'-diphenylmethane)bismaleimide and 56.55 g of N-methyl-2-pyrrolidone were placed under a nitrogen stream in a 500-mL four-neck flask equipped with a thermometer, a stirrer, a nitrogen introducing tube, a dropping funnel with a bypass tube and a condenser tube, and completely dissolved by stirring at room temperature for 1 hour to provide a thermosetting polyimide resin composition. The solution viscosity of the thermosetting polyimide resin composition measured was 2.00 Pa·s. After allowing to stand still the solution for one month at 23°C, 50%RH, the solution viscosity measured was 2.57 Pa·s, and it was thus found that the thermosetting polyimide resin composition was not cured at room temperature since there was substantially no change in solution viscosity.
The polyimide resin composition was then coated to a coating thickness of 1.30 mm on an aluminum plate having a dimension of 150 mm × 150 mm and a thickness of 1 mm, and cured by placing in a dryer at 240°C for 1 hour, whereby a polyimide cured product (film) having a thickness of 0.50 mm was obtained, and it was confirmed that the polyimide cured product (film) was a flexible film after peeling off from the aluminum plate. Furthermore, the reduction in weight (%) of the polyimide cured product (film) measured after maintaining at 250°C for 1 hour was 0.93%, and it was found that the cured product was not decomposed and had heat resistance upon heating to 250°C since there was substantially no reduction in weight at 250°C. The measurement of the dynamic viscoelasticity of the polyimide cured product (film) revealed that the storage elastic modulus (G') was 5.08 × 10⁸ Pa, and the loss elastic modulus (G") was 1.90 × 10⁷ Pa, at 25°C.
The storage elastic modulus (G') was substantially constant without change around 250°C, and it was thus found that the cured product was in a rubber-like state around 250°C and has rubber elasticity even under heating to 250°C. The glass transition temperature obtained from the peak top of the loss tangent (tanδ) was 171.0°C.

### Example 5

### Measurement of 90° Peeling Adhesion Force

The thermosetting polyimide resin composition obtained in Example 1 was coated to a coating thickness of 0.88 mm on an aluminum plate having a dimension of 150 mm × 150 mm and a thickness of 1 mm, and cured by placing in a dryer at 230°C for 2 hours, whereby a polyimide cured product (film) having a thickness of 0.44 mm was obtained. A polyimide resin film, Kapton 200H, having a width of 25 mm, a length of 150 mm and a thickness of 50 µm was adhered to the polyimide cured product (film) formed on the aluminum plate, and the 90° peeling adhesion force (N per 25 mm) measured at 23°C, 50%RH was 0.31 (N per 25 mm). Upon measuring the adhesion force on 90° peeling, it was visually inspected as to whether or not so-called deposition of adhesive, in which an adhesive substance remains on the surface of the polyimide resin film, Kapton 200H, occurred, and it was confirmed that there was no deposition of adhesive.

### Example 6

### Measurement of 90° Peeling Adhesion Force

The thermosetting polyimide resin composition obtained in Example 2 was coated to a coating thickness of 0.80 mm on an aluminum plate having a dimension of 150 mm × 150 mm and a thickness of 1 mm, and cured by placing in a dryer at 230°C for 2 hours, whereby a polyimide cured product (film) having a thickness of 0.40 mm was obtained. A polyimide resin film, Kapton 200H, having a width of 25 mm, a length of 150 mm and a thickness of 50 µm was adhered to the polyimide cured product (film) formed on the aluminum plate, and the 90° peeling adhesion force (N per 25 mm) measured at 23°C, 50%RH was 0.13 (N per 25 mm). Upon measuring the adhesion force on 90° peeling, it was visually inspected as to whether or not so-called deposition of adhesive, in which an adhesive substance remains on the surface of the polyimide resin film, Kapton 200H, occurred, and it was confirmed that there was no deposition of adhesive.

### Example 7

### Measurement of 90° Peeling Adhesion Force

The thermosetting polyimide resin composition obtained in Example 3 was coated to a coating thickness of 0.84 mm on an aluminum plate having a dimension of 150 mm × 150 mm and a thickness of 1 mm, and cured by placing in a dryer at 230°C for 2 hours, whereby a polyimide cured product (film) having a thickness of 0.42 mm was obtained. A polyimide resin film, Kapton 200H, having a width of 25 mm, a length of 150 mm and a thickness of 50 µm was adhered to the polyimide cured product (film) formed on the aluminum plate, and the 90° peeling adhesion force (N per 25 mm) measured at 23°C, 50%RH was 0.24 (N per 25 mm). Upon measuring the adhesion force on 90° peeling, it was visually inspected as to whether or not so-called deposition of adhesive, in which an adhesive substance remains on the surface of the polyimide resin film, Kapton 200H, occurred, and it was confirmed that there was no deposition of adhesive.

### Comparative Example 1

### Production of Thermosetting Polyimide Resin Composition

The entire amount of the reaction product solution containing the polyimide (A4) obtained in Synthesis Example 4, 83.50 g (0.23 mol) of N,N'-(4,4'-diphenylmethane)bismaleimide and 261.62 g of N-methyl-2-pyrrolidone were placed under a nitrogen stream in a 1,000-mL four-neck flask equipped with a thermometer, a stirrer, a nitrogen introducing tube, a dropping funnel with a bypass tube and a condenser tube, and completely dissolved by stirring at room temperature for 30 minutes to provide a thermosetting polyimide resin composition. The solution viscosity of the thermosetting polyimide resin composition measured was 9.86 Pa·s. After allowing to stand still the solution for 30 minutes at 23°C, 50%RH, the solution was changed from a liquid state to a solid state, and it was found that the pot life was short.

### Comparative Example 2

### Production of Thermosetting Polyimide Resin Composition

40.25 g (0.20 mol) of 4,4'-diaminodiphenyl ether, 72.61 g (0.20 mol) of N,N'-(4,4'-diphenylmethane)bismaleimide and 263.34 g of N-methyl-2-pyrrolidone were placed under a nitrogen stream in a 1,000-mL four-neck flask equipped with a thermometer, a stirrer, a nitrogen introducing tube, a dropping funnel with a bypass tube and a condenser tube, and completely dissolved by stirring at room temperature for 30 minutes to provide a thermosetting polyimide resin composition. The polyimide resin composition was coated to a coating thickness of 1.30 mm on an aluminum plate having a dimension of 150 mm × 150 mm and a thickness of 1 mm, and cured by placing in a dryer at 230°C for 2 hours, whereby a polyimide cured product (film) having a thickness of 0.42 mm was obtained. A polyimide resin film, Kapton 200H, having a width of 25 mm, a length of 150 mm and a thickness of 50 µm was tried to be adhered to the polyimide cured product (film) formed on the aluminum plate, but could not be adhered thereto due to the absence of adhesion force.

### [Industrial Applicability]

The thermosetting polyimide resin composition of the present invention is a one-component curing type, provides a cured product having flexibility and adhesiveness, and has high heat resistance with a long pot life. In the case where the aliphatic diamine used for producing the thermosetting polyimide resin composition is a polyoxyalkylenediamine, the resulting cured product of the thermosetting polyimide resin composition has such a characteristic feature of exhibiting adhesiveness. Accordingly, the cured product can be applied to a wide range of industrial products, such as an adhesive tape and the like, as a purpose of a heat resistant adhesive material that is required to have flexibility and adhesiveness at a high temperature.
Furthermore, the polyimide (B) as a component of the thermosetting polyimide resin composition and the polyimide (A) as a precursor thereof can be synthesized with no solvent, and can be diluted with a low boiling point solvent, such as tetrahydrofuran, acetone and the like. Accordingly, the thermosetting polyimide resin composition of the present invention can be obtained as a solution having a high solid concentration in the production process thereof, whereby the working process can be rationalized by shortening the drying time for obtaining a cured product of the polyimide resin composition, and safety and health conditions can be improved by reducing the amount of the solvent exhausted upon drying.

## Claims

1. A thermosetting polyimide resin composition obtained by the following steps (1) to (3):
Step (1): mixing a tetracarboxylic acid component containing at least one compound selected from a tetracarboxylic dianhydride represented by formula (1), a tetracarboxylic acid represented by formula (2) and a derivative of the tetracarboxylic acid, with an aliphatic diamine represented by formula (3), to make a number of moles of the tetracarboxylic acid component excessive to a number of moles of the aliphatic diamine, and reacting them under heating to synthesize a polyimide (A);
Step (2): mixing the polyimide (A) obtained in the step (1) with an aromatic diamine represented by formula (4), and reacting them under heating to synthesize a polyimide (B); and
Step (3) : mixing the polyimide (B) obtained in the step (2) with a bismaleimide compound represented by formula (5): 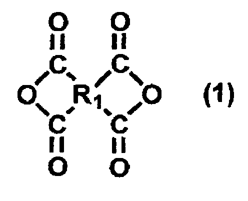 (wherein R₁ represents a tetravalent organic group) 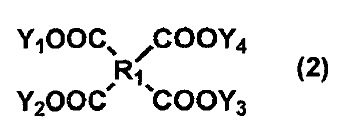 (wherein R₁ represents a tetravalent organic group, and Y₁ to Y₄ each independently represent a hydrocarbon group having from 1 to 8 carbon atoms)
**H₂N-X₁-NH₂** **(3)**
(wherein X₁ represents a divalent organic group having from 1 to 221 carbon atoms, and containing an aliphatic group or an alicyclic group bonded directly to an amino group, wherein the divalent organic group may contain a substituent, such as an aromatic group, an ether group and the like, as a part of the structure thereof)
**H₂N-X₂-NH₂** **(4)**
(wherein X₂ represents a divalent organic group having from 6 to 27 carbon atoms, and containing an aromatic ring bonded directly to an amino group, wherein the divalent organic group may contain a substituent, such as an aliphatic group, an alicyclic group and the like, as a part of the structure thereof) 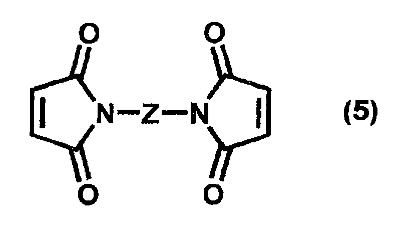 (wherein Z represents a divalent organic group).

2. The thermosetting polyimide resin composition as claimed in claim 1, wherein a mixing amount of the tetracarboxylic acid component is from 1.01 to 2 mol per 1 mol of the aliphatic diamine; a mixing ratio of the aromatic diamine is from 0.02 to 2 mol per 1 mol of the aliphatic diamine used upon producing the polyimide (A); and a mixing ratio of the bismaleimide compound is from 0.25 to 4 mol per 1 mol of the aliphatic diamine used upon producing the polyimide (A).

3. The thermosetting polyimide resin composition as claimed in claim 1, wherein a mixing amount of the tetracarboxylic acid component is from 1.5 to 2 mol per 1 mol of the aliphatic diamine; a mixing ratio of the aromatic diamine is from 0.02 to 2 mol per 1 mol of the aliphatic diamine used upon producing the polyimide (A); and a mixing ratio of the bismaleimide compound is from 0.25 to 4 mol per 1 mol of the aliphatic diamine used upon producing the polyimide (A).

4. The thermosetting polyimide resin composition as claimed in claim 1, wherein a mixing amount of the tetracarboxylic acid component is from 1.5 to 2 mol per 1 mol of the aliphatic diamine; a mixing ratio of the aromatic diamine is from 1 to 2 mol per 1 mol of the aliphatic diamine used upon producing the polyimide (A); and a mixing ratio of the bismaleimide compound is from 0.25 to 4 mol per 1 mol of the aliphatic diamine used upon producing the polyimide (A).

5. The thermosetting polyimide resin composition as claimed in claim 1, wherein a mixing amount of the tetracarboxylic acid component is from 1.5 to 2 mol per 1 mol of the aliphatic diamine; a mixing ratio of the aromatic diamine is from 1 to 2 mol per 1 mol of the aliphatic diamine used upon producing the polyimide (A); and a mixing ratio of the bismaleimide compound is from 0.75 to 4 mol per 1 mol of the aliphatic diamine used upon producing the polyimide (A).

6. The thermosetting polyimide resin composition as claimed in one of claims 1 to 5, wherein conditions of thermal reaction in the step (1) include a reaction temperature of from 150 to 200°C and a reaction time of from 1 to 12 hours.

7. The thermosetting polyimide resin composition as claimed in one of claims 1 to 6, wherein conditions of thermal reaction in the step (2) include a reaction temperature of from 150 to 200°C and a reaction time of from 1 to 12 hours.

8. The thermosetting polyimide resin composition as claimed in one of claims 1 to 7, wherein conditions of mixing in the step (3) include a temperature of from 0 to 80°C.

9. The thermosetting polyimide resin composition as claimed in one of claims 1 to 8, wherein R₁ in formulae (1) and (2) represents at least one selected from a tetravalent group derived from cyclohexane and a tetravalent group derived from benzene.

10. The thermosetting polyimide resin composition as claimed in claim 9, wherein R₁ in formulae (1) and (2) represents a tetravalent group derived from cyclohexane.

11. The thermosetting polyimide resin composition as claimed in one of claims 1 to 10, wherein the bismaleimide compound is N,N'-(4,4'-diphenylmethane)bismaleimide or N,N'-[4,4'-bis(3-methyl-5-ethylphenyl)methane]bismaleimide.

12. The thermosetting polyimide resin composition as claimed in one of claims 1 to 11, wherein the aromatic diamine is 4,4'-diaminodiphenyl ether.

13. The thermosetting polyimide resin composition as claimed in one of claims 1 to 10, wherein the aliphatic diamine is a polyoxyalkylenediamine.

14. The thermosetting polyimide resin composition as claimed in claim 13, wherein the aliphatic diamine is a polyoxyalkylenediamine having a skeleton derived from a propylene oxide and an ethylene oxide represented by formula (6): 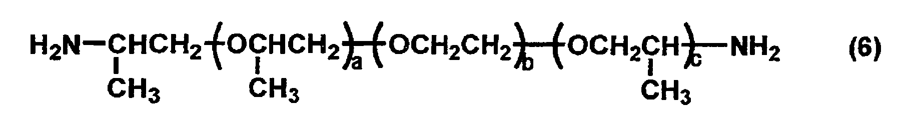 (wherein a and c each represent a polymerization degree of a propylene oxide unit, and b represents a polymerization degree of an ethylene oxide unit).

15. The thermosetting polyimide resin composition as claimed in claim 13, wherein the aliphatic diamine is a polyoxyalkylenediamine having a propylene oxide skeleton represented by formula (7): 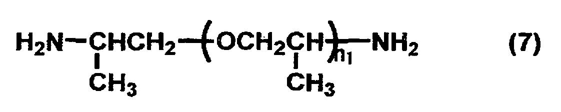 (wherein n₁ represents a polymerization degree of a propylene oxide unit).

16. A cured product obtained by curing the thermosetting polyimide resin composition as claimed in one of claims 1 to 12 under heating to from 150 to 250°C for from 0.5 to 10 hours.

17. A cured product having adhesiveness obtained by curing the thermosetting polyimide resin composition as claimed in one of claims 13 to 15 under heating to from 150 to 250°C for from 0.5 to 10 hours.

## Patentansprüche

1. Wärmehärtende Polyimidharz-Zusammensetzung, erhalten durch die folgenden Schritte (1) bis (3);
Schritt (1): Mischen einer Tetracarbonsäure-Komponente, umfassend mindestens Verbindung ausgewählt aus einem Tetracarbonsäuredianhydrid, dargestellt durch Formel (1), einer Tetracarbonsäure, dargestellt durch Formel (2) und einem Derivat der Tetracarbonsäure, mit einem aliphatischen Diamin, dargestellt durch Formel (3), um eine Anzahl von Molen der Tetracarbonsäure-Komponente im Überschuss zu einer Anzahl von Molen des aliphatischen Diamins bereitzustellen und diese unter Erhitzen reagieren zu lassen, um ein Polyimid (A) zu synthetisieren;
Schritt (2): Mischen des Polyimids (A), erhalten in Schritt (1) mit einem aromatischen Diamin, dargestellt durch Formel (4), und Umsetzen derselben unter Erhitzen, um ein Polyimid (B) zu synthetisieren; und
Schritt (3): Mischen des Polyimids (B), erhalten in Schrift (2), mit einer Bismaleimid-Verbindung, dargestellt durch Formel (5): 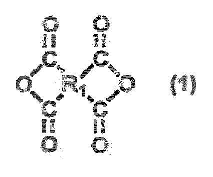 (worin R₁ eine vierwertige organische Gruppe darstellt) 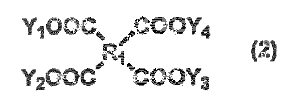 (worin R₁ eine vierwertige organische Gruppe darstellt und Y₁ bis Y₄ jeweils unabhängig voneinander eine Kohlenwasserstoff-Gruppe mit 1 bis 8 Kohlenstoffatomen darstellen)
**H₂N-X₁-NH₂** **(3)**
(worin X₁ eine zweiwertige organische Gruppe mit 1 bis 221 Kohlenstoffatomen, enthaltend eine aliphatische Gruppe oder eine alicyclische Gruppe direkt gebunden an eine Aminogruppe darstellt, worin die zweiwertige organische Gruppe einen Substituenten aufweisen kann, wie eine aromatische Gruppe, eine Ethergruppe und dergleichen, als Teil ihrer Struktur)
**H₂N-X₂-NH₂** **(4)**
(worin X₂ eine zweiwertige organische Gruppe mit 6 bis 27 Kohlenstoffatomen, enthaltend einen aromatischen Ring direkt gebunden an eine Aminogruppe darstellt, worin die zweiwertige organische Gruppe einen Substituenten aufweisen kann, wie eine aliphatische Gruppe, eine alicyclische Gruppe und dergleichen, als Teil ihrer Struktur) 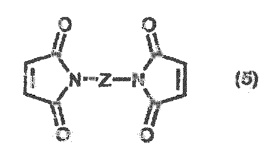 (worin Z eine zweiwertige organische Gruppe darstellt),

2. Wärmehärtende Polylmidharz-Zusammensetzung gemäß Anspruch 1, worin eine Mischungsmenge der Tetracarbonsäure-Komponente 1,01 bis 2 Mol pro 1 Mol des aliphatischen Diamins ist; ein Mischungsverhältnis des aromatischen diamine 0,02 bis 2 Mol pro 1 Mol des aliphatischen Diamins, verwendet zur Herstellung des Polyimids (A), ist; und ein Mischungsverhältnis der Bismaleimid-Verbindung 0,25 bis 4 Mol pro 1 Mol des aliphatischen Diamins, verwendet zur Herstellung des Polyimids (A), ist.

3. Wärmehärtende Polyimidharz-Zusammensetzung gemäß Anspruch 1, worin eine Mischungsmenge der Tetracarbonsäure-Komponente 1,5 bis 2 Mol pro 1 Mol des aliphatischen Diamins ist; ein Mischungsverhältnis des aromatischen Diamins 0,02 bis 2 Mol pro 1 Mol des aliphatischen Diamins, verwendet zur Herstellung des Polyimids (A), ist; und ein Mischungsverhältnis der Bismaleimid-verbindung 0,25 bis 4 Mol pro 1 Mol des aliphatischen Diamins, verwendet zur Herstellung des Polyimids (A), ist.

4. Wärmehärtende Polyimidharz-Zusammensetzung gemäβ Anspruch 1, worin eine Mischungsmenge der Tetracarbonsäure-Verbindung 1,5 bis 2 Mol pro 1 Mol des aliphatischen Diamins ist; ein Mischungsverhältnis des aromatischen Diamins bis 2 Mol pro 1 Mol des aliphatischen Diamins, verwendet zur Herstellung des Polyimids (A), ist; und ein Mischungsverhältnis der Bismaleimid-Verbindung 0,25 bis 4 Mol pro 1 Mol des aliphatischen Diamins, verwendet zur Herstellung des Polyimids (A), ist.

5. Wärmehärtende Polyimidharz-Zusammensetzung gemäß Anspruch 1, worin eine Mischungsmenge der Tetracarbonsäure-Verbindung 1,5 bis 2 Mol pro 1 Mol des aliphatischen Diamins ist; ein Mischungsverhältnis des aromatischen Diamins 1 bis 2 Mol pro 1 Mol des aliphatischen Diamins, verwendet zur Herstellung des Polyimids (A), ist; und ein Mischungsverhältnis der Bismaleimid-Verbindung 0,75 bis 4 Mol pro 1 Mol des aliphatischen Diamins, verwendet zur Herstellung des Polyimids (A), ist.

6. Wärmehärtende Polyimidharz-Zusammensetzung gemäß einem der Ansprüche 1 bis 5, worin die Bedingungen zur thermischen Reaktion in Schritt (1) eine Reaktionstemperatur von 150 bis 200°C und eine Reaktionszeit von 1 bis 12 Stunden umfassen.

7. Wärmehärtende Polyimidharz-Zusammensetzung gemäß einem der Ansprüche 1 bis 6, worin die Bedingungen zur thermischen Reaktion in Schritt (2) eine Reaktionstemperatur von 150 bis 200°C und eine Reaktionszeit von 1 bis 12 Stunden umfassen.

8. Wärmehärtende Polylmidharz-Zusammensetzung gemäß einem der Ansprüche 1 bis 7, worin die Bedingungen zum Mischen in Schritt (3) eine Temperatur von 0 bis 80°C umfassen.

9. Wärmehärtende Polyimidharz-Zusammensetzung gemäß einem der Ansprüche 1 bis 8, worin R₁ in den Formeln (1) und (2) mindestens einen Substituenten ausgewählt aus einer vierwertigen Gruppe, abgeleitet von Cyclohexan, und einer vierwertigen Gruppe, abgeleitet von Benzol, darstellt.

10. Wärmehärtende Polyimidharz-Zusammensetzung gemäß Anspruch 9, worin R₁ in den Formeln (1) und (2) eine vierwertige Gruppe, abgeleitet von Cyclohexan, darstellt.

11. Wärmehärtende Polyimidharz-Zusammensetzung gemäß einem der Ansprüche 1 bis 10, worin die Bismaleimid-Verbindung N,N'-(4,4'-Diphenylmethan)bismaleimid oder N,N'-[4,4'-Bis(3-methyl-5-ethylphenyl)methan]bismaleimid ist.

12. Wärmehärtende Polyimidharz-Zusammensetzung gemäß einem der Ansprüche 1 bis 11, worin das aromatische Diamin 4,4'-Diaminodiphenylether ist.

13. Wärmehärtende Polyimidharz-Zusammensetzung gemäß einem der Ansprüche 1 bis 10, worin das aliphatische Diamin Polyoxyalkylendiamin ist.

14. Wärmehärtende Polyimidharz-Zusammensetzung gemäß Anspruch 13, worin das aliphatische Diamin ein Polyoxyalkylendiamin mit einem Gerüst, abgeleitet von einem Propylenoxid und einem Ethylenoxid, dargestellt durch Formel (6), ist: 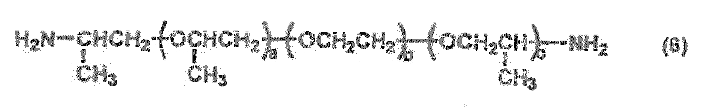 (worin a und c jeweils einen Polymerisationsgrad einer Propylenoxid-Einheit darstellen und b einen Polymerisationsgrad einer Ethylenoxid-Einheit darstellt).

15. Wärmehärtende Polyimidharz-Zusammensetzung gemäß Anspruch 13, worin das aliphatische Diamin ein Polyoxyalkylendiamin mit einem Propylenoxid-Gerüst, dargestellt durch Formel (7), ist: 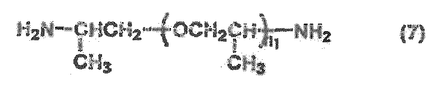 (worin n₁ einen Polymerisationsgrad einer Propylenoxid-Einheit darstellt).

16. Gehärtetes Produkt, erhalten durch Härten der wärmehärtenden Polyimidharz-Zusammensetzung gemäß der Ansprüche 1 bis 1 2 unter Erhitzen auf 150 bis 250 °C für 0,5 bis 10 Stunden.

17. Gehärtetes Produkt mit Haftfähigkelt, erhalten durch Härten der wärmehärtenden Polyimidharz-Zusammensetzung gemäß einem der Ansprüche 13 bis 15 unter Erhitzen auf 150 bis 250°C für 0,5 bis 10 Stunden.

## Revendications

1. Composition de résine de polyimide thermodurcissable obtenue par les étapes (1) à (3) suivantes :
Étape (1) : le mélange d'un composé de l'acide tétracarboxylique contenant au moins un composé sélectionné parmi un dianhydride d'acide tétracarboxylique représenté par la formule (1), un acide tétracarboxylique représenté par la formule (2) et un dérivé de l'acide tétracarboxylique avec une diamine aliphatique représentée par la formule (3) pour avoir un excès du nombre des moles du composé de l'acide tétracarboxylique par rapport au nombre des moles de la diamine aliphatique et la réaction desdits composés en chauffant pour synthétiser un polyimide (A) ;
Étape (2) : le mélange du polyimide (A) obtenu dans l'étape (1) avec une diamine aromatique représentée par la formule (4) et la réaction desdits composés en chauffant pour un polyimide (B) ; et
Étape (3) : le mélange du polyimide (B) obtenu dans l'étape (2) avec un composé de bismaléimide représenté par la formule (5) : 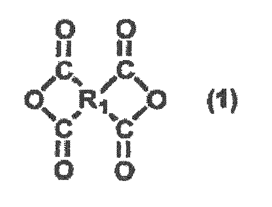 (dans laquelle R₁ représente un groupe organique tétravalent) 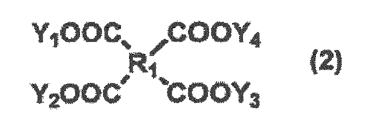 (dans laquelle R₁ représente un groupe organique tétravalent et chacun de Y₁ et Y₄ représente indépendamment un groupe d'hydrocarbure ayant de 1 à 8 atomes de carbone)
**H2_{N}-X₁-NH₂** **(3)**
(dans laquelle X₁ représente un groupe organique divalent ayant de 1 à 221 atomes de carbone et contentant un groupe aliphatique ou un groupe alicyclique directement lié à un groupe amino, dans laquelle le groupe organique divalent peut contenir un substituant tel qu'un groupe aromatique, un groupe éther et d'autres comme partie de sa structure)
**H₂N-X₂-NH₂** **(4)**
(dans laquelle X₂ représente un groupe organique divalent ayant de 6 à 27 atomes de carbone et contenant un cycle aromatique directement lié à un groupe amino, dans laquelle le groupe organique divalent peut contenir un substituant tel qu'un groupe aliphatique, un groupe alicyclique et d'autres comme partie de sa structure) 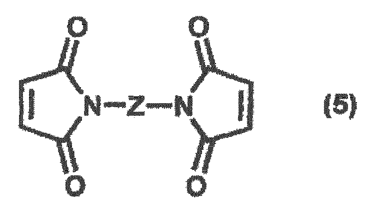 (dans laquelle Z représente un groupe organique divalent).

2. Composition de de polyimide thermodurcissable selon la revendication 1, dans laquelle une quantité de mélange du composé de l'acide est de 1,01 à 2 mole per 1 mole de la diamine aliphatique ; un rapport de mélange de la diamine aromatique est de 0,02 à 2 mole per 1 mole de la diamine aliphatique utilisée pour produire le polyimide (A) ; et un rapport de mélange du composé de bismaléimide est de 0,25 à 4 mole per 1 mole de la diamine aliphatique utilisée pour produire le polyimide (A).

3. Composition de résine de polyimide thermodurcissable selon la revendication 1, dans laquelle une quantité de mélange du composé de l'acide tétracarboxylique est de 1,5 à 2 mole per 1 mole de la diamine aliphatique ; un rapport de mélange de la diamine aromatique est de 0,02 à 2 mole per 1 mole de la diamine aliphatique utilisée pour produire le polyimide (A) ; et un rapport de mélange du composé de bismaléimide est de 0,25 à 4 mole per 1 mole de la diamine aliphatique utilisée pour produire le polyimide (A).

4. Composition de résine de polyimide thermodurcissable selon la revendication 1, dans laquelle une quantité de mélange du composé de l'acide tétrocarboxylique est de 1,5 à 2 mole per 1 mole de la diamine aliphatique ; un rapport de mélange de la diamine aromatique est de 1 à 2 mole per 1 mole de la diamine aliphatique utilisée pour produire le polyimide (A) ; et un rapport de mélange du composé de bismaléimide est de 0,25 à 4 mole per 1 mole de la diamine aliphatique utilisée pour produire le polyimide (A).

5. Composition de résine de polyimide thermodurcissable selon la revendication 1, dans laquelle une quantité de mélange du composé de l'acide tétracarboxylique est de 1,5 à 2 mole per 1 mole de la diamine aliphatique ; un rapport de mélange de la diamine aromatique est de 1 à 2 mole per 1 mole de la diamine aliphatique utilisée pour produire le polyimide (A) ; et un rapport de mélange du composé de bismaléimide est de 0.75 à 4 mole per 1 mole de la diamine aliphatique utilisée pour produire le polyimide (A).

6. Composition de résine de polyimide thermodurcissable selon l'une des revendications 1 à 5, dans laquelle des conditions de la réaction thermique dans l'étape (1) incluent une température de réaction de 150 à 200 °C et un temps de réaction de 1 à 1 2 heures,

7. Composition de résine de polyimide thermodurcissable selon l'une des revendications 1 à 6, dans laquelle des conditions de la réaction thermique dans l'étape (2) incluent une température de réaction de 150 à 200 °C et un temps de réaction de 1 à 1 2 heures.

8. Composition de résine de polyimide thermodurcissable selon l'une des revendications 1 à 7, dans laquelle des conditions du mélange dans l'étape (3) incluent une température de 0 à 80 °C.

9. Composition de résine de polyimide thermodurcissable selon l'une des revendications 1 à 8, dans laquelle R₁ dans la formule (1) et (2) représente au moins un groupe tétravalent sélectionné parmi un groupe tétravalent dérivé du cyclohexane et un groupe tétravalent dérivé du benzène.

10. Composition de résine de polyimide thermodurcissable selon la revendication 9, dans laquelle R₁ dans la formule (1) et (2) représente un groupe tétravalent dérivé du cyclohexane.

11. Composition de résine de polyimide thermodurcissable selon l'une des revendications 1 à 10, dans laquelle le composé de bismaléimide est N,N'-(4,4'-diphénylméthane)bismaléimide ou N,N'-[4,4'-bis(3-méthyl-5-éthylphényl)méthane]bismaléimide.

12. Composition de résine de polyimide thermodurcissable selon l'une des revendications 1 à 11, dans laquelle la diamine aromatique est de l'éther du 4,4'-diaminodiphényl.

13. Composition de résine de polyimide thermodurcissable selon l'une des revendications 1 à 10, dans laquelle la diamine aliphatique est une polyoxyalkylènediamine.

14. Composition de résine de polyimide thermodurcissable selon la revendication 13, dans laquelle la diamine aliphatique est une polyoxyalkylènediamine ayant un squelette dérivé d'un oxyde de propylène et un oxyde d'éthylène représenté par la formule (6) : 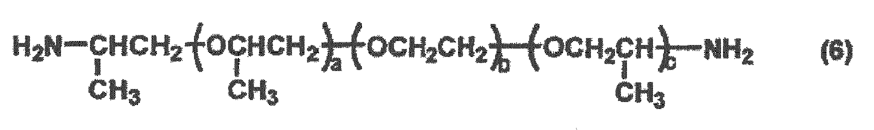 (dans laquelle chacun de a et c représente un degré de polymérisation de l'unité d'un oxyde de propylène et b représente un degré de polymérisation de l'unité d'un oxyde d'éthylène).

15. Composition de résine de polyimide thermodurcissable selon la revendication 13, dans laquelle la diamine aliphatique est une polyoxyalkylènediamine ayant un squelette d'un oxyde de propylène et représenté par la formule (7) : 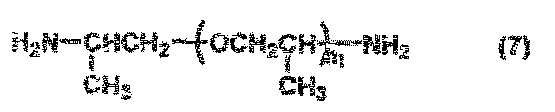 (dans laquelle n₁ représente un degré de polymérisation de l'unité d'un oxyde de propylène).

16. Produit durci obtenu par durcissement de la composition de résine de polyimide thermodurcissable selon l'une des revendications 1 à 12 en chauffant de 150 à 250 °C pendant de 0,5 à 10 heures.

17. Produit durci présentant d'adhésivité obtenu par durcissement de la composition de résine de polyimide thermodurcissable selon l'une des revendications 13 à 15 en chauffant de 150 à 250 °C pendant de 0,5 à 10 heures.
